# EUROPÄISCHE PATENTANMELDUNG

(11) **EP 1 139 550 A2**
(43) Veröffentlichungstag der Anmeldung: **04.10.2001**
(21) Anmeldenummer: 01810269.9
(22) Anmeldetag: 19.03.2001
(51) Int. Cl.: H02K 23/42

(54) **Elektromotor**

(30) Priorität: 30.03.2000 DE 10015924
(71) Anmelder: HILTI Aktiengesellschaft, 9494 Schaan (LI)
(72) Erfinder: Echtler, Karl, 82178 Puchheim (DE); Degmayr, Andreas, 81377 München (DE)
(74) Vertreter: Wildi, Roland

(57) **Zusammenfassung**

Der einen Kommutator aufweisende Elektromotor mit wechselnder Drehrichtung, vorzugsweise als Antrieb für handgeführte Elektrowerkzeuggeräte, weist zur Verminderung des Ankerquerfelds und zur Erhöhung der Bürstenstandzeit eine Nut (10) in der Symmetrieachse (9) des Stators (4) auf, wobei vorteilhaft der Kommutator symmetrisch zu dieser angeordnet ist.

## Beschreibung

Die Erfindung bezeichnet einen mit Kommutator betriebenen Elektromotor, vorzugsweise einen im Reihenschluss betriebenen durchzugsbelüfteten Universalmotor mit einer hohen Leistungsdichte, insbesondere als Antrieb für handgeführte Elektrohandwerkzeuggeräte wie Schraubwerkzeuggeräte.

Derartige Elektromotoren bestehen aus einem sich um die Drehachse drehenden Rotor, welcher als Anker ausgeführt mit einer stromdurchflossenen Ankerwicklung um die Zähne versehen ist, und einem diesen mantelförmig umgebenden Stator mit der stromdurchflossenen Statorwicklung zur Erzeugung eines Erregerfeldes als Teil des resultierenden Magnetfeldes, zwischen dessen magnetischen Polen sich die um die Zähne angeordnete Ankerwicklung befindet, welche über die Polschuhe des Stators, den Luftspalt und die Zähne des Rotors vom Magnetfeld durchsetzt wird.

Durch einen bei der Drehung des Rotors die Fusspunkte der Ankerwicklungen umschaltenden Kommutator wird sichergestellt, dass die Fläche der Ankerwicklung stets etwa senkrecht zu der Richtung des von der Statorwicklung erzeugten Magnetfeldes steht. Durch die über das Magnetfeld auf einen stromdurchflossenen Leiter ausgeübte Kraft wird bezüglich des Stators das den Rotor des Elekromotors antreibende Drehmoment erzeugt. Dazu durchsetzt das Magnetfeld der Statorwicklung als Erregerfeld die Ankerwicklung hauptsächlich entlang der zur Vermeidung von Wirbelstromverlussten gegeneinender isolierten, zumeist aus Dynamoblechlammelen bestehenden, Polschuhe, wobei eine hohe magnetische Induktion in diesen auftritt.

Der der Ankerwicklung zufliessende Strom teilt sich im aus Lamellen und Bürsten bestehenden Kommutator in zwei Teile, die den Anker derart umfliessen, dass dieser senkrecht zum Erregerfeld der Statorwicklung magnetisiert wird. Dieses als Ankerquerfeld bezeichnete parasitäre Magnetfeld überlagert sich dem Erregerfeld. Das resultierende Magnetfeld ist bezüglich eines spitzen Winkels gegenüber dem Erregerfeld verschoben und ebenso die senkrecht dazu stehende neutrale Zone, in welcher keine Reaktanzspannung induziert wird.

Durch die zeitweise leitende Überbrückung zweier Lamellen durch eine Bürste entsteht beim Unterbrechen dieses Kurzschlusskreises vermittelt über das resultierende Magnetfeld eine Reaktanzspannung, welche das Bürstenfeuer verursacht. Zur Erzielung eines stromfreien Umschaltens für einen funkenfreien Lauf und damit minimalen Verschleisses der Bürsten werden die Bürsten über eine Schaltverschiebung in der sich bezüglich des resultierenden Gesamtfeldes ergebenden neutralen Zone angeordnet, die einen endlichen Winkel zur Erregerwicklung ausbildet. Dadurch ist die Anordnung der Bürsten des Kommutators nicht mehr axialsymmetrisch bezüglich der Richtung des Erregerfeldes, wodurch sich kein optimaler Betrieb in beiden Drehrichtungen ergibt.

Alternativ ist bekannt, die Achse des Erregerfeldes gegenüber dem symmetrisch im Stator angeordneten Kommutator durch mehrteilig ausgelegte und je nach Betriebsart (Antrieb, Abbremsung) zusammengeschaltete Teilerregerwicklungen um asymmetrische Polfüsse zu drehen. Derartige Elektromotoren sind bspw. aus der Druckschrift DE19636519 vorbekannt. Nachteilig bei derartigen, bezüglich der Symmetrieachse des Erregerfeldes, asymmetrischen Elektromotoren ist, dass diese nur in einer Drehrichtung mit minimalem Bürstenverschleiss betrieben werden können. Zudem ist gegenüber dem Elektromotor gleicher Charakteristika ohne Schaltverschiebung eine nachteilige Wicklungsanpassung über eine höhere Rotorwindungszahl erforderlich.

Elektromotoren, deren Drehrichtung etwa zu gleichen Teilen wechselt, bspw. eingesetzt als Antrieb von Schraubwerkzeuggeräten, werden deshalb bezüglich der Anordnung der Bürsten und der Pole symmetrisch ausgeführt, was jedoch einen höheren Verschleiss der Bürsten relativ zu in einer einzigen Drehrichtung betriebenen gleichartigen asymmetrischen Elektromotoren zur Folge hat. Eine Möglichkeit zur Begrenzung des Verschleisses über eine ausreichende Kommutierung in beiden Drehrichtung besteht wiederum in der mehrteiligen Ausführung und Zusammenschaltung der Erregerwicklungen um die Polschuhe des Stators, wie in der Druckschrift DE-OS1563022 aufgezeigt. Nachteilig bei derartigen Lösungen ist insbesondere der damit verbundene höhere Fertigungsaufwand und die zusätzlich nötigen, bei einer bestimmten Betriebsart jeweils nicht genutzten, Teile der Erregerwicklung.

Durch die im höheren Leistungsbereich hohe magnetische Sättigung der Zähne des Ankers befinden sich diese im nichtlinearen Kennlinienbereich, wodurch sich über das somit begrenzte, resultierende Magnetfeld eine Schwächung des Erregerfeldes ergibt, die als Ankerrückwirkung bezeichnet wird. Bei stossweiser Belastung, wie sie bspw. bei Schraubvorgängen benötigt wird, führt dies zu einem magnetischen Feldschwächestoss, welcher die Stabilität des Elektromotors gefährdet. Um die Ankerrückwirkung in zulässigen Grenzen zu halten, wird üblicherweise der Luftspalt zwischen den Polschuhen und den Zähnen erhöht, was jedoch eine stärkere notwendige Erregung und damit einen schlechteren Wirkungsgrad bedingt.

Eine Methode zur Beseitigung des Ankerquerfeldes ist die zusätzliche Anordnung von Kompensationswicklungen senkrecht zur Erregerwicklung, welche als Wendepole bezeichnet werden. Die Kompensationswicklung und die Ankerwicklung liegen bezüglich des Stromflusses in Gegenreihe, so dass stets eine Kompensation gegeben ist. Jedoch werden aus fertigungstechnischen Gründen nur grosse Elektromotore mit derartigen Wendepolen ausgerüstet, da die Anordnung von Wendepolen bei kleinen, durchzugsbelüfteten Universalmotoren mit einer hohen Leistungsdichte technisch kaum durchführbar ist. Für handgeführte Antriebe und damit notwendig kleine und leichte Elektromotoren ist diese Lösung daher ungeeignet.

Aufgabe der Erfindung ist für in beide Drehrichtungen betriebene Elektromotoren mit Kommutator die Erhöhung der Bürstenstandzeit über die Verbesserung des Kommutierungsverhaltens, insbesondere über Verminderung des durch das Ankerquerfeld erzeugten Bürstenfeuers bei Elektromotoren mit symmetrisch zur Achse des Erregerfeldes bzw. des Stators angeordneten Bürsten des Kommutators. Insbesondere soll dies bei kleinen und leichten Elektromotoren fertigungstechnisch günstig realisierbar sein.

Die Aufgabe wird durch die unabhängigen Ansprüche gelöst. Vorteilhafte Weiterbildungen ergeben sich aus den abhängigen Ansprüchen. Wesentlich für die Lösung dieser Aufgabe ist die Ausbildung einer Nut zwischen den Polschuhen des Stators parallel zur Richtung des Erregerfeldes, welche materialseitig eine geringere Permeabilität oder Sättigung als der Stator aufweist. Diese Nut liegt bezüglich des Erregerfeldes parallel und beeinflusst dieses daher praktisch nicht, jedoch bezüglich des sich negativ auf das Kommutierungsverhalten auswirkenden Ankerquerfeldes in Reihe und schwächt dieses erheblich ab. Dadurch wird relativ zu einem Stator ohne Nut sowohl das Ankerquerfeld als auch die damit verbundene Ankerrückwirkung deutlich reduziert. Dadurch wird eine Verbesserung des Kommutierungsverhaltens sowie eine Erhöhung der Bürstenstandzeit erreicht.

Da diese Lösung zur Kompensation des Ankerquerfeldes auch bei in beiden Drehrichtungen betriebenen Elektromotoren sowie bei Elektromotoren ohne Wendepole anwendbar ist, eignet sich diese Lösung insbesondere für kleine und leichte Elektromotoren. Zudem ist gegenüber einem Elektromotor ohne Nut keine Wicklungsanpassung erforderlich.

Die durch die Verringerung des Ankerquerfeldes erreichte vorteilhafte Verringerung der Ankerrückwirkung vermindert die Gefahr von Feldschwächestössen bei stossweiser Belastung, wie sie insbesondere beim Antrieb von Schraubwerkzeuggeräten auftreten.

Vorteilhaft kann die üblicherweise mit Luft ausgefüllte offene Nut auch durch anderes, nicht ferromagnetisches und nicht isotrop leitendes, Material ausgefüllt werden, bspw. durch Plastikmaterial, um ein Zusetzen der Nut durch loses Material zu vermeiden.

Die Erfindung wird nachfolgend in einer vorteilhaften Ausführung anhand der
Fig. 1 als Elektromotor mit Nut mit Feldbild der magnetischen Induktion des Magnetfeldes
Fig. 2 als Gegenüberstellung des Ankerquerfeldes mit und ohne Nut näher beschrieben.

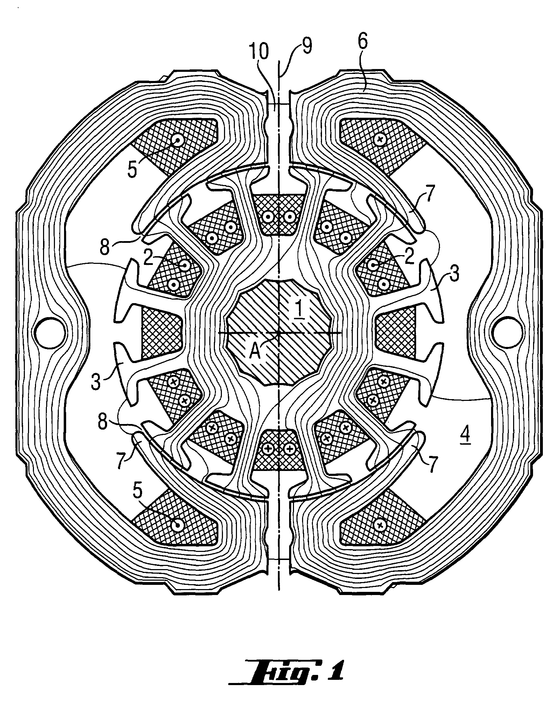

Nach Fig. 1 besteht ein Elektromotor aus einem sich um die Drehachse A drehenden Rotor 1, welcher als Anker ausgeführt mit einer stromdurchflossenen Ankerwicklung 2 um Zähne 3 versehen ist, und einem diesen mantelförmig umgebenden Stator 4 mit einer stromdurchflossenen Statorwicklung 5 zur Erzeugung eines Erregerfeldes als Teil eines resultierenden Magnetfeldes 6, zwischen dessen magnetischen Polen sich die um die Zähne 3 angeordnete Ankerwicklung 2 befindet, welche über Polschuhe 7 des Stators 4, über einen Luftspalt 8 und über die Zähne 3 des Rotors 1 vom Magnetfeld 6 durchsetzt wird. Der Stator 4 bildet innerhalb der in einer Symmetrieachse 9 des Erregerfeldes gelegenen Polmitte eine zumindest teilweise durchgehende Nut 10 aus, welche vorteilhaft an beiden Polen gleichartig ausgebildet ist, die mit Luft oder einem anderen nichtferromagnetischen Material gefüllt ist und somit keinen oder keinen wesentlichen Einfluss auf das Erregerfeld besitzt, wohl aber die zur Symmetrieachse 9 senkrechten Feldkomponenten des resultierenden Magnetfeldes 6 wesentlich schwächt. Die Breite der Nut 10 ist vorteilhaft ein Mehrfaches der Breite des Luftspaltes 8 und somit, abhängig von der konkreten Dimensionierung, in der Grössenordnung von einigen mm.

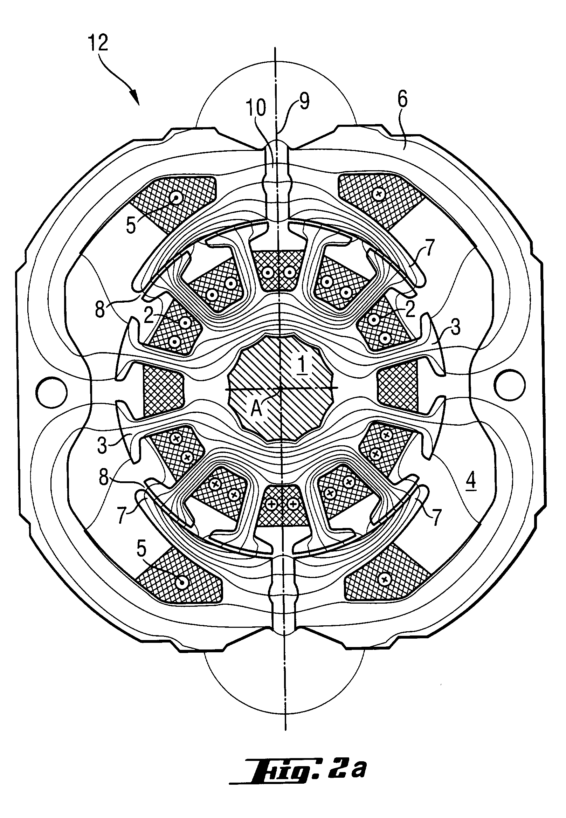

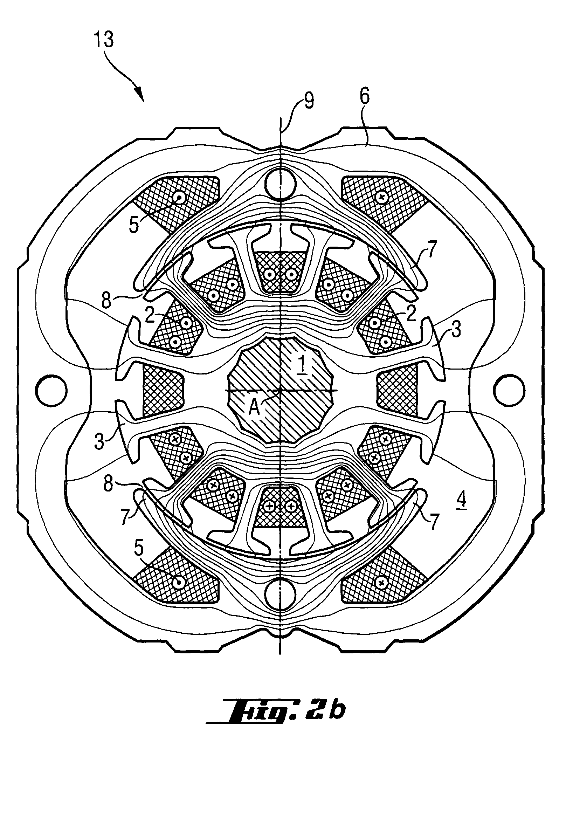

In Fig. 2 wird das Feldbild der magnetischen Induktion des zu unterdrückenden Ankerquerfeldes jeweils für einen erfindungsgemässen Elektromotor 12 mit Nut 10 und einen gleichartig ausgelegten vorbekannten Elektromotor 13 ohne Nut 10 verglichen. Es ist ersichtlich, dass das senkrecht zur Symmetrieachse 9 verlaufende Ankerquerfeld beim erfindungsgemässen Elektromotor 12 mit Nut 10 wesentlich schwächer ausgebildet ist. Dadurch werden auch bei einem bezüglich der Symmetrieachse 9 symmetrischen Aufbau des Elektromotors die durch das Ankerquerfeld hervorgerufenen nachteiligen Folgen wesentlich verringert. Insbesondere wird das Kommutierungsverhalten verbessert und dadurch die Bürstenstandzeit erhöht. Durch den symmetrischen Aufbau ergibt sich dieser Vorteil gleichartig für beide möglichen Drehrichtungen. Da der erfindungsgemässe Elektromotor 12 mit Nut 10 ohne Wendepole auskommt, ist er besonders für kleine und leichte Elektromotoren fertigungstechnisch günstig, welche bspw. bei handgeführten Antrieben für Schraubwerkzeuggeräte Verwendung finden.

Eine FEM-Simulationsberechnung für eine konkrete Dimensionierung eines Elektromotors bestätigt die Reduzierung des Ankerquerfeldes durch eine mit Luft ausgefüllte Nut von 2,5mm Breite für die beiden Grenzstellungen des Rotors.

| Ankerquerfeld in µVs | mit Nut | ohne Nut |
|---|---|---|
| Zahn in Polmitte | 190,6 | 470,1 |
| Ankerwicklung in Polmitte | 127,1 | 492,1 |

## Patentansprüche

1. Elektromotor mit einem Kommutator, bestehend aus einem sich um die Drehachse A drehenden Rotor (1), welcher als Anker ausgeführt mit einer stromdurchflossenen Ankerwicklung (2) versehen ist, und einem diesen mantelförmig umgebenden Stator (4) zur Erzeugung eines Erregerfeldes als Teil eines Magnetfeldes (6), **dadurch gekennzeichnet, dass** der Stator (4) in der Symmetrieachse (9) des Erregerfeldes eine zumindest teilweise durchgehende Nut (10) ausbildet und **dass** diese Nut (10) eine geringere Permeabilität und/oder Sättigung als der Stator (4) aufweist.

2. Elektromotor nach Anspruch 1, **dadurch gekennzeichnet, dass** die Nut (10) an beiden Polen eine gleiche Geometrie aufweist.

3. Elektromotor nach Anspruch 1 oder Anspruch 2, **dadurch gekennzeichnet, dass** der Kommutator senkrecht zur Symmetrieachse (9) angeordnet ist.

4. Elektromotor nach einem der vorangehenden Ansprüche, **dadurch gekennzeichnet, dass** der Elektromotor bezüglich der Symmetrieachse (9) symmetrisch aufgebaut ist.

5. Elektromotor nach einem der vorangehenden Ansprüche, **dadurch gekennzeichnet, dass** die Nut (10) entlang der Symmetrieachse (9) durchgängig ausgeführt ist.

6. Elektromotor nach einem der vorangehenden Ansprüche, **dadurch gekennzeichnet, dass** die Nut (10) mit einem nichtferromagnetischen Material ausgefüllt ist.

7. Elektromotor nach einem der vorangehenden Ansprüche, **dadurch gekennzeichnet, dass** die Breite der Nut (10) ein Mehrfaches der Breite des Luftspaltes (8) beträgt.

8. Elektromotor nach einem der vorangehenden Ansprüche, **dadurch gekennzeichnet, dass** der Elektromotor keine Wendepole aufweist.

9. Verwendung eines Elektromotors nach einem der vorangehenden Ansprüche in handgeführten Elektrowerkzeuggeräten, optional im Reihenschluss.

10. Verwendung eines Elektromotors nach Anspruch 9 für Elektrowerkzeuggeräte mit wechselnder Drehrichtung.
